# EUROPÄISCHE PATENTANMELDUNG

(11) **EP 2 647 896 A2**
(43) Veröffentlichungstag der Anmeldung: **09.10.2013**
(21) Anmeldenummer: 13000621.6
(22) Anmeldetag: 07.02.2013
(51) Int. Cl.: F16L 23/08

(54) **Verbindungsanordnung für eine Kegelflanschverbindung und Kegelflanschverbindung**

(30) Priorität: 03.04.2012 DE 102012006756
(71) Anmelder: NORMA Germany GmbH, 63477 Maintal (DE)
(72) Erfinder: Henrich, Detlef, 63694 Limeshain (DE); Krauss, Mathias, 61130 Nidderau (DE); Legel, Thomas, 63110 Rodgau (DE); Mann, Stephan, 63599 Bieber (DE); Krüger, Manfred, 63654 Büdingen (DE)
(74) Vertreter: Knoblauch, Andreas

(57) **Zusammenfassung**

Es wird eine Verbindungsanordnung (9) für eine Kegelflanschverbindung (1) angegeben, mit einer ringförmig gebogenen Spanneinrichtung (10), deren Innendurchmesser veränderbar ist, und von der Spanneinrichtung (10) radial nach innen ragenden Schenkeln (17, 18), zwischen denen in axialer Richtung ein Aufnahmeraum (26) gebildet ist.

Man möchte eine derartige Kegelflanschverbindung kostengünstig ausgestalten.

Hierzu ist vorgesehen, dass die Schenkel (17, 18) an einem Einsatz (15) ausgebildet sind, der innerhalb der Spanneinrichtung (10) angeordnet ist und einen die Schenkel (17, 18) verbindenden Rücken (16) aufweist, der von innen an der Spanneinrichtung (10) anliegt, wobei die Schenkel (17, 18) in Umfangsrichtung mehrere Unterbrechungen (19) aufweisen.

## Beschreibung

Die Erfindung betrifft eine Verbindungsanordnung für eine Kegelflanschverbindung mit einer ringförmig gebogenen Spanneinrichtung, deren Innendurchmesser veränderbar ist, und von der Spanneinrichtung radial nach innen ragenden Schenkeln, zwischen denen in axialer Richtung ein Aufnahmeraum gebildet ist.

Ferner betrifft die Erfindung eine Kegelflanschverbindung mit einer derartigen Verbindungsanordnung.

Eine Kegelflanschverbindung dient dazu, zwei Bauteile miteinander zu verbinden, beispielsweise zwei Rohre. Hierzu weist jedes Bauteil an dem Ende, an dem die Verbindung erfolgen soll, einen radial nach außen vorstehenden Flansch auf, der an seiner vom freien Ende des Bauteils abgewandten Rückseite abgeschrägt ist. Die Verbindungsanordnung ist vielfach als so genannte Profilschelle ausgebildet, bei der die radial nach innen ragenden Schenkel entsprechend dem Neigungswinkel der Kegelflan-Hierzu weist jedes Bauteil an dem Ende, an dem die Verbindung erfolgen soll, einen radial nach außen vorstehenden Flansch auf, der an seiner vom freien Ende des Bauteils abgewandten Rückseite abgeschrägt ist. Die Verbindungsanordnung ist vielfach als so genannte Profilschelle ausgebildet, bei der die radial nach innen ragenden Schenkel entsprechend dem Neigungswinkel der Kegelflansche geneigt sind. Wenn die Profilschelle gespannt wird, so dass sich ihr Innendurchmesser verkleinert, dann drücken die Schenkel die Kegelflansche in Axialrichtung zusammen.

Eine derartige Profilschelle ist beispielsweise aus DE 198 18 562 C1 bekannt.

Eine derartige Profilschelle hat sich zwar bewährt. Sie erfordert jedoch relativ enge Toleranzen sowohl an den Kegelflanschen als auch am Querschnitt der Profilschelle. Dies macht es praktisch unmöglich, die gleiche Profilschelle für unterschiedliche Durchmesser der zu verbindenden Baueile zu verwenden. Auch kleine Unterschiede im Bereich von 1 oder 2 mm sind von einer Profilschelle praktisch nicht mehr aufzufangen. Man benötigt daher für jeden Durchmesser der zu verbindenden Bauteile eine eigene Profilschelle. Zur Herstellung einer derartigen Profilschelle wiederum ist ein entsprechendes Werkzeug notwendig. Je mehr Werkzeuge notwendig sind, desto höher sind die Kosten für die Herstellung der Profilschellen und damit auch für die Kegelflanschverbindung.

Der Erfindung liegt die Aufgabe zugrunde, eine Kegelflanschverbindung kostengünstig auszugestalten.

Diese Aufgabe wird bei einer Verbindungsanordnung der eingangs genannten Art dadurch gelöst, dass die Schenkel an einem Einsatz ausgebildet sind, der innerhalb der Spanneinrichtung angeordnet ist und einen die Schenkel verbindenden Rücken aufweist, der von innen an der Spanneinrichtung anliegt, wobei die Schenkel in Umfangsrichtung mehrere Unterbrechungen aufweisen.

Eine derartige Verbindungsanordnung lässt sich mit geringem Aufwand fertigen. Die Schenkel sind an einem Einsatz angeordnet. Dieser Einsatz kann aus einem Band gefertigt werden, also quasi endlos. Bei diesem Band müssen lediglich die Schenkel abgebogen werden. Dies erfolgt zweckmäßigerweise nach dem Einbringen der Unterbrechungen. Man kann dann das Band ablängen und den Einsatz formen, indem das Band ringförmig so gebogen wird, dass es in die Spanneinrichtung hineinpasst. Dabei kann zwischen den Enden des Einsatzes durchaus ein größerer Abstand vorhanden sein, solange die Verbindungsanordnung noch nicht gespannt ist. Wenn beim Spannen der Spanneinrichtung der Innendurchmesser der Spanneinrichtung verkleinert wird, dann nähern sich die Enden des Einsatzes einander an. Die Schenkel wirken dann auf die Kegelflansche der zu verbindenden Bauelemente und verbinden sie. Da man das gleiche Band für Verbindungsanordnungen verwenden kann, die für unterschiedliche Nenndurchmesser vorgesehen sind, werden die Produktionskosten erheblich reduziert. Bei unterschiedlichen Nenndurchmessern muss man lediglich das den Einsatz bildende Band mit unterschiedlichen Längen ausbilden. Das gleiche Band kann jedoch für unterschiedliche Verbindungsanordnungen verwendet werden. Zweckmäßigerweise sind die Unterbrechungen jeweils mit einer Teilung angeordnet, die so gewählt ist, dass definierte Durchmesser-Sprünge erreicht werden können. Diese Durchmesser-Sprünge können beispielsweise einer genormten Reihe entsprechen.

Vorzugsweise sind die Schenkel federnd am Rücken angeordnet. Wenn die Spanneinrichtung auf die Kegelflansche gespannt wird, werden die Schenkel auseinandergedrückt, so dass dann eine Federkraft erzeugt wird, die die Kegelflansche zusammendrückt. Diese Federkraft kann durch die Wahl des Materials der Schenkel und die Wahl der Geometrie der Schenkel beeinflusst werden.

Vorzugsweise weisen die Unterbrechungen radial außen einen abgerundeten Boden auf. Damit vermeidet man scharfe Ecken, an denen das den Einsatz bildende Band einreißen könnte. Aufgrund des abgerundeten Bodens lässt sich der Einsatz vielmehr verbiegen, wobei ein gewisser Biegewiderstand durchaus vorhanden ist. Durch die Unterbrechungen ist dieser Biegewiderstand jedoch beherrschbar, so dass das Spannen der Spanneinrichtung auch mit menschlicher Kraft ohne weiteres möglich ist.

Vorzugsweise weist der Rücken im Querschnitt eine Biegung auf. Diese Biegung erlaubt eine gewisse Vorspannung, mit der die Schenkel in axialer Richtung nach innen belastet werden können. Die Schenkel müssen daher nicht mehr eine Neigung haben, die der Neigung der Kegelflansche entspricht. Vielmehr reicht es aus, wenn sie mit ihren Spitzen an den Kegelflanschen entlang wandern. Die Biegung des Rückens erzeugt dann eine Spannkraft, die ausreicht, um die Kegelflansche zusammenzuhalten.

Vorzugsweise ist der Einsatz an der Spanneinrichtung befestigt, wobei mindestens ein Ende des Einsatzes gegenüber der Spanneinrichtung beweglich ist. Die Befestigung des Einsatzes an der Spanneinrichtung kann beispielsweise durch einen Schweißpunkt oder dergleichen erfolgen. Wenn mindestens ein Ende des Einsatzes gegenüber der Spanneinrichtung beweglich ist, dann ist es möglich, trotz der Befestigung des Einsatzes an der Spanneinrichtung die Spanneinrichtung zu spannen und ihren Innendurchmesser zu verkleinern. Der Einsatz ist unverlierbar in der Spanneinrichtung gehalten.

Vorzugsweise weisen die Schenkel Spitzabschnitte auf, die in den Aufnahmeraum hineinragen. Damit liegen die Spitzenabschnitte an den Kegelflanschen an, wenn die Verbindungsanordnung verwendet wird. Man muss also keine engen Toleranzen mehr beachten, um die Schenkel flächig an den Kegelflanschen anliegen zu lassen. Die Berührung zwischen den Kegelflanschen und den Schenkeln erfolgt vielmehr entlang einer Linie.

Auch ist von Vorteil, wenn mindestens ein Spitzenabschnitt ein gerundetes Ende aufweist. Dies erleichtert die Montage. Ein gerundetes Ende lässt sich leicht herstellen, beispielsweise durch Biegen.

Hierbei ist bevorzugt, dass die Spitzenabschnitte der Schenkel, die axial einander gegenüberliegen, in der gleichen radialen Position angeordnet sind. Damit vermeidet man Kippmomente auf die Kegelflansche. In Umfangsrichtung ist ein Versatz zulässig.

Vorzugsweise weisen die Spitzenabschnitte jeweils Gleitflächen auf, die zur Radialrichtung der Spanneinrichtung geneigt sind. Damit wird das Spannen erleichtert. Die Spitzenabschnitte können entlang der Kegelmantelflächen radial nach innen gleiten, ohne dass eine erhöhte Reibung auftritt. Bei diesem Gleiten werden die Spitzenabschnitte voneinander weggespreizt. Je stärker diese Spreizung ist, desto größer ist die Rückfederkraft, die die Kegelflansche axial zusammenhält.

Vorzugsweise weisen die Schenkel im Querschnitt eine Biegung auf, die vom Aufnahmeraum her gesehen konkav ausgebildet ist. Dies bewirkt zweierlei. Zum einen ist sichergestellt, dass lediglich die Spitzenabschnitte an den Kegelflanschen anliegen, der Rest der Schenkel jedoch nicht in Kontakt mit den Kegelflanschen kommt. Zum anderen kann man mit einer derartigen Biegung die Vorspannung der Schenkel groß genug ausgestalten, so dass die gewünschten Haltekräfte auf die Kegelflansche aufgebracht werden können.

Besonders bevorzugt ist, dass der Einsatz im Querschnitt eine C- oder Ω-förmige Biegung aufweist. Dieser Begriff ist hier weit zu verstehen. Der Einsatz ist insgesamt konkav ausgebildet, beispielsweise gerundet. Er kann allerdings auch ebene Flächen aufweisen, beispielsweise in einem Anlagebereich an der Spanneinrichtung. Mit dieser Gestaltung des Querschnitts, insbesondere mit der Biegung des Querschnitts insgesamt, lässt sich eine gewünschte Vorspannung einstellen, die später die gewünschte Haltekraft erzeugt.

Vorzugsweise ist die Spanneinrichtung als Schneckengewindeschelle ausgebildet. Eine Schneckengewindeschelle ermöglicht es, relativ große Durchmesserunterschiede zu überbrücken. Wenn man die Spanneinrichtung öffnet, also die Schneckengewindeschelle mit ihrem größten Durchmesser versieht, dann ist es möglich, die Schenkel über die Kegelflansche hinwegzuführen. Danach kann der Durchmesser der Schneckengewindeschelle verkleinert werden, bis die gewünschte Spannkraft erreicht ist.

Die Erfindung wird bei einer Kegelflanschverbindung dadurch gelöst, dass man eine Verbindungsanordnung verwendet, wie sie oben beschrieben worden ist.

Hierbei ist bevorzugt, dass die Kegelflansche in radialer Richtung eine Höhe aufweisen, die größer ist als die radiale Erstreckung des Einsatzes. Damit ist es möglich, den Einsatz zur Anlage an die radial äußeren Bereiche der Kegelflansche zu bringen und gleichzeitig sicherzustellen, dass die radial inneren Enden der Schenkel immer noch an den Kegelmantelflächen anliegen. Wenn man die Spanneinrichtung so weit spannt, dass der Rücken des Einsatzes am Umfang der Kegelflansche anliegt, dann hat man automatisch eine Begrenzung, die anzeigt, dass das Ende des Spannvorgangs erreicht ist. Eine visuelle Montagekontrolle ist möglich.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Kegelflanschverbindung,
- Fig. 2: eine Seitenansicht der Kegelflanschverbindung,
- Fig. 3: eine Vorderansicht der Kegelflanschverbindung,
- Fig. 4: eine Draufsicht auf die Kegelflanschverbindung,
- Fig. 5: eine perspektivische Darstellung der Kegelflanschverbindung,
- Fig. 6: eine gegenüber Fig. 1 abgewandelte Ausführungsform eines Einsatzes,
- Fig. 7: eine weitere Abwandlung eines Einsatzes,
- Fig. 8: eine gegenüber Fig. 7 abgewandelte Ausführungsform eines Einsatzes,
- Fig. 9: eine abgewandelte Ausbildung eines Einsatzes und

- Fig. 10: eine weitere Abwandlung eines Einsatzes.

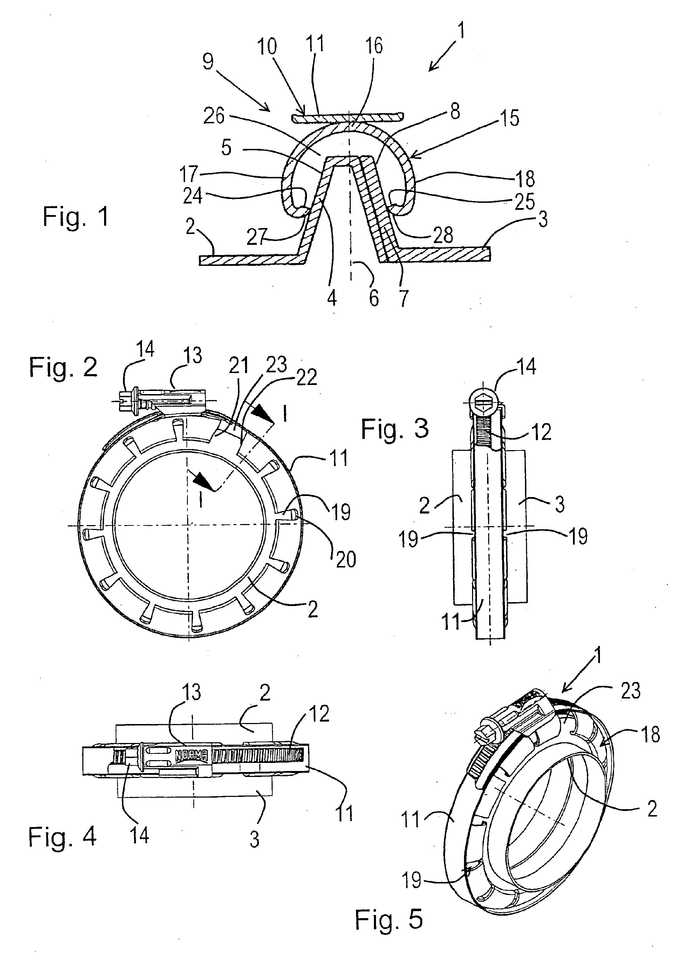

Fig. 1 zeigt in schematischer Darstellung einen Schnitt durch einen Teil einer Kegelflanschverbindung 1. Die Kegelflanschverbindung dient dazu, ein erstes Bauteil 2, beispielsweise ein Rohr, mit einem zweiten Bauteil 3, beispielsweise einem Anschlussstutzen, zu verbinden. Hierzu weist das erste Bauteil 2 einen radial nach außen weisenden Vorsprung 4 auf, der auf seiner vom zweiten Bauteil 3 abgewandten Außenseite 5 eine Neigung relativ zur Radialrichtung 6 aufweist. Das zweite Bauteil 3 weist ebenfalls einen radial nach außen gerichteten Vorsprung 7 auf, der auf seiner vom ersten Bauteil 2 abgewandten Außenseite 8 ebenfalls zur Radialrichtung 6 geneigt ist. Im Grunde reicht es auch aus, wenn eine der beiden Außenseiten 5, 8 geneigt oder abgeschrägt ist.

Eine Verbindungsanordnung 9 weist eine ringförmig gebogene Spanneinrichtung 10 auf, die hier als Schneckengewindeschelle (siehe die Fig. 2-4) ausgebildet ist. Die Spanneinrichtung 10 weist hierzu ein Spannband 11 auf, das im Bereich eines Endes mit einer Gewindespur 12 und im Bereich des anderen Endes mit einem Spannkopf 13 versehen ist. Im Spannkopf 13 ist eine Spannschraube 14 angeordnet, die mit der Gewindespur in Eingriff steht. Durch Verdrehen der Spannschraube 14 kann der Innendurchmesser der Spanneinrichtung 10, genauer gesagt, der Innendurchmesser des Spannbandes 11, verändert werden.

Ein Einsatz 15 mit einem hier im Querschnitt C-förmigen Verlauf ist innerhalb der Spanneinrichtung 10 angeordnet. Zweckmäßigerweise ist der Einsatz 15 in einem Bereich in Umfangsrichtung mit dem Spannband 11 verbunden, beispielsweise durch ein oder mehrere Schweißpunkte, durch Nieten, mechanisches Fügen, Einhängen oder eine Laschenbefestigung. Damit ist der Einsatz 15 unverlierbar innerhalb der Spanneinrichtung gehalten. Er weist aber mindestens ein Ende auf, das sich gegenüber der Spanneinrichtung 10 in Umfangsrichtung bewegen kann, wenn die Spanneinrichtung 10 gespannt wird und ihren Innendurchmesser verkleinert.

Der Einsatz 15 weist einen Rücken 16 auf, der mit dem Spannband 11 verbunden ist. Vom Rücken 16 gehen in Axialrichtung beidseits zwei Schenkel 17, 18 ab, die sich in Radialrichtung 6 nach innen erstrecken. Wie insbesondere aus Fig. 2 zu erkennen ist, weist jeder Schenkel in Umfangsrichtung mehrere Unterbrechungen 19 auf, wobei jede Unterbrechung 19 radial außen einen abgerundeten Boden 20 aufweist. Der Boden 20 kann auch eine andere Form aufweisen, beispielsweise die Form eines Trapezes.

Wie in Fig. 2 zu erkennen ist, weist der Einsatz 15 zwei Enden 21, 22 auf, zwischen denen ein Abstand 23 vorgesehen ist. Dieser Abstand 23 weist ein Minimum auf, wenn die Spanneinrichtung 10 gespannt ist. Wenn die Spanneinrichtung 10 vollständig entspannt ist, weist der Abstand 23 ein Maximum auf. In diesem Zustand haben die Schenkel 17, 18 an ihrer radialen Innenseite einen Durchmesser, der es erlaubt; die Verbindungsanordnung 9 über die Vorsprünge 4, 7 hinwegzuführen.

Der Schenkel 17 weist an seiner radialen Innenseite einen Spitzenabschnitt 24 auf. Der Schenkel 18 weist an seiner radialen Innenseite einen Spitzenabschnitt 25 auf. Die beiden Spitzenabschnitte 24, 25 sind jeweils nach innen gebogen, ragen also in einen Aufnahmeraum 26 hinein, der zwischen den Schenkeln 17, 18 ausgebildet ist.

Die beiden Spitzenabschnitte 24, 25 weisen Gleitflächen 27, 28 auf, die zur Radialrichtung 6 geneigt sind. Damit ist es möglich, dass die Gleitflächen 27, 28 auf den Außenseiten 5, 8 der Vorsprünge 4, 7 gleiten können, ohne sich dort zu verhaken. Die Spitzenabschnitte 24, 25 sind rund gebogen.

Die Schenkel 17, 18 sind federnd mit dem Rücken 16 verbunden oder der Einsatz ist insgesamt federnd ausgebildet. Wenn die Spanneinrichtung 10 gespannt wird, werden die Schenkel 17, 18 auseinandergedrückt und wirken dann mit einer Federkraft auf die Vorsprünge 4, 7. Dadurch lassen sich Toleranzen kompensieren, z.B. bei Durchmesserunterschieden oder bei unterschiedlichen axialen Abständen der Außenseiten 5, 8.

Der Abstand zwischen den Spitzenabschnitten 24, 25 und dem Rücken 16 in radialer Richtung ist kleiner als die Erstreckung der Vorsprünge 4, 7 in radialer Richtung. Damit ist es möglich, dass man den Rücken 16 mit seiner radialen Innenseite bis zur Anlage an die radiale Außenseite der Vorsprünge 4, 7 spannen kann, ohne dass die Spitzenabschnitte 24, 25 die Bauteile 2, 3 außerhalb der Vorsprünge 4, 7 berühren. Wenn der Rücken 16 am Außenumfang der Vorsprünge 4, 7 anliegt, ist ein weiteres Spannen der Spanneinrichtung 10 nicht mehr möglich. Ein Monteur, der die Verbindungsanordnung 9 an der Kegelflanschverbindung 1 montiert, bemerkt eine deutliche Erhöhung der Spannkraft und weiß dann, dass er die Verbindungsanordnung ausreichend gespannt hat.

Wie in Fig. 1 zu erkennen ist, weist der Rücken 16 eine Krümmung oder Biegung auf. Diese Krümmung oder Biegung geht in die Krümmung oder Biegung der Schenkel 17, 18 über. Damit ist es möglich, den Schenkeln 17, 18 eine Vorspannung zu vermitteln, so dass sie mit einer ausreichenden Kraft auf die Vorsprünge 4, 7 wirken und diese in axialer Richtung zusammendrücken. Diese Kraft wird umso größer, je weiter die Spitzenabschnitte 24, 25 radial nach innen bewegt werden, weil aufgrund der abgeschrägten Außenseiten 5, 8 mit zunehmender Bewegung radial nach innen ein Aufspreizen der Schenkel 17, 18 erfolgt. Dieses Aufspreizen hat allerdings den Vorteil, dass man nicht auf das Einhalten von engen Toleranzen angewiesen ist. Sowohl die Vorsprünge 4, 7 als auch der Einsatz 15 können mit größeren Toleranzen gefertigt werden, ohne dass die Befestigungskraft der Verbindungsanordnung 9 beeinträchtigt wird.

Die Befestigungskraft der Verbindungsanordnung 9 lässt sich mit mehreren Maßnahmen einstellen. Man kann beispielsweise den Abstand zwischen Unterbrechungen 19 in Umfangsrichtung größer oder kleiner wählen. Bei einem größeren Abstand benötigt man zwar eine etwas stärkere Kraft beim Spannen der Spanneinrichtung 10. Dafür können die Schenkel 17, 18 mit einer höheren Vorspannung versehen werden. Man kann auch ein dickeres Material für den Einsatz 15 verwenden, das einem Verbiegen einen erhöhten Widerstand entgegensetzt. Auch dies trägt dazu bei, die Spannkraft zu erhöhen.

Der Einsatz 15 kann relativ einfach gefertigt werden. Man verwendet hierzu ein flaches Band, in das zunächst die Unterbrechungen 19 eingebracht werden, beispielsweise durch Stanzen. Danach werden die Schenkel 17, 18 und die Spitzenabschnitte 24, 25 gebogen. Als letzter Arbeitsschritt muss das so umgeformte Band "aufgerollt" werden, um die Ringform zu erzeugen, die in Fig. 2 zu erkennen ist.

Zweckmäßigerweise sind die beiden Spitzenabschnitte 24, 25, die sich in axialer Richtung gegenüberliegen, an der gleichen radialen Position angeordnet. Damit wird vermieden, dass die Verbindungsanordnung 9 ein Kippmoment auf die Vorsprünge 4, 7 ausübt.

Die Oberflächen der Außenseiten 5, 8 der Vorsprünge 4, 7 können relativ rau sein, was die Produktionskosten weiter niedrig hält. Die Profilgeometrie, aus der der Einsatz 15 gefertigt wird, kann quasi endlos gefertigt werden. Eine Abstimmung der Profillängen auf die gewünschten Durchmesser wird durch entsprechendes Ablängen zwischen den Segmenten, die später die Einsätze 15 bilden, erreicht. Die Gestaltung der Segmentlänge erlaubt den Einsatz für eine bestimmte Durchmesser-Reihe.

Anstelle der dargestellten Schneckengewindeschelle 10 können natürlich auch Spannschellen oder Gelenkbolzenschellen zum Einsatz kommen. Im Prinzip ist auch die Verwendung einer Federbandschelle möglich. Erforderlich ist, dass diese Schellen eine Durchmesserveränderung zulassen, bei der einerseits die Schenkel 17, 18 über die Vorsprünge 4, 7 geführt werden können, andererseits die Schelle ausreichend gespannt werden kann, um die notwendigen Axialkräfte zwischen den Spitzenabschnitten 24, 25 auf die Vorsprünge 4, 7 zu übertragen.

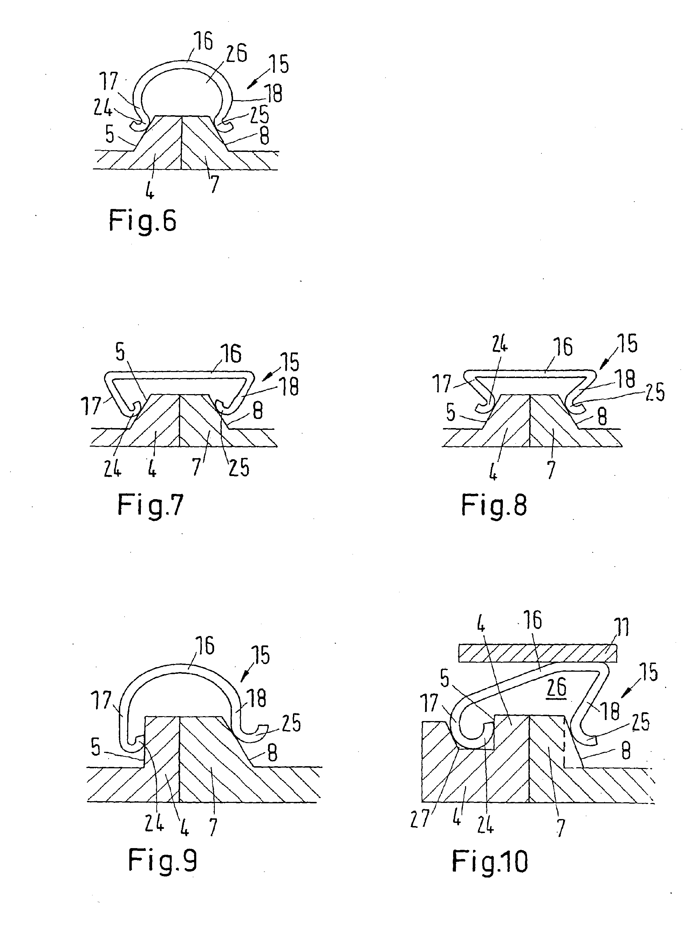

Die Fig. 6 bis 10 zeigen verschiedene Ausführungsmöglichkeiten des Einsatzes 15. Gleiche und funktionsgleiche Elemente sind mit den gleichen Bezugszeichen versehen wie in den Fig. 1 bis 5.

Fig. 6 zeigt einen Einsatz 15, bei dem die Spitzenabschnitte 24, 25 der Schenkel 17, 18 ein nach außen abgebogenes Ende aufweisen. Die Spitzenabschnitte 24, 25 sind also nach wie vor in den Aufnahmeraum 26 hinein gebogen. Insgesamt hat der Einsatz 15 aber im Querschnitt die Form eines Ω. Dadurch kann man ebenfalls ein leichteres Gleiten der Spitzenabschnitte 24, 25 auf den Außenseiten 5, 8 der Vorsprünge 4, 7 erreichen.

Fig. 7 zeigt einen Einsatz 15, der sich von dem Einsatz 15 nach Fig. 1 dadurch unterscheidet, dass der Rücken 16 im Wesentlichen als ebene Fläche ausgebildet ist. Auch die Schenkel 17, 18 sind, bis auf die Spitzenabschnitte 24, 25, im Wesentlichen eben ausgebildet. Eine Federwirkung der Schenkel 17, 18 auf die Vorsprünge 4, 7 zu wird dann durch eine geeignete Materialwahl erreicht.

Fig. 8 zeigt eine Ausgestaltung entsprechend Fig. 7, bei der ein Unterschied darin besteht, dass die Spitzenabschnitte 24, 25 wiederum nach außen abgebogene Enden aufweisen.

Fig. 9 zeigt einen unsymmetrischen Einsatz, bei dem ein Spitzenabschnitt 24 nach innen und der andere Spitzenabschnitt 25 nach außen gebogen ist. In diesem Fall ist nur die Außenwand 8 mit einer Neigung versehen. Die Außenwand 5 verläuft hier im Wesentlichen senkrecht.

Fig. 10 zeigt einen ebenfalls asymmetrisch ausgebildeten Einsatz 15, bei dem der Rücken eine schwache Krümmung aufweist und geneigt ist. Dementsprechend greift das Spannband 11 hier in einem Bereich am Einsatz 15 an, der radial außerhalb des Schenkels 18 angeordnet ist. Der Schenkel 17, dessen Spitzenabschnitt 24 in den Aufnahmeraum 26 hineingebogen ist, ist in einer Nut 27 angeordnet, d.h. er kann sich nicht vom Vorsprung 4 weg bewegen.

## Patentansprüche

1. Verbindungsanordnung (9) für eine Kegelflanschverbindung (1) mit einer ringförmig gebogenen Spanneinrichtung (10), deren Innendurchmesser veränderbar ist, und von der Spanneinrichtung (10) radial nach innen ragenden Schenkeln (17, 18), zwischen denen in axialer Richtung ein Aufnahmeraum (26) gebildet ist, **dadurch gekennzeichnet, dass** die Schenkel (17, 18) an einem Einsatz (15) ausgebildet sind, der innerhalb der Spanneinrichtung (10) angeordnet ist und einen die Schenkel (17, 18) verbindenden Rücken (16) aufweist, der von innen an der Spanneinrichtung (10) anliegt, wobei die Schenkel (17, 18) in Umfangsrichtung mehrere Unterbrechungen (19) aufweisen.

2. Verbindungsanordnung nach Anspruch 1, **dadurch gekennzeichnet, dass** die Schenkel (17, 18) federnd am Rücken (16) angeordnet sind.

3. Verbindungsanordnung nach Anspruch 1 oder 2, **dadurch gekennzeichnet, dass** die Unterbrechungen (19) radial außen einen abgerundeten Boden (20) aufweisen.

4. Verbindungsanordnung nach einem der Ansprüche 1 bis 3, **dadurch gekennzeichnet, dass** der Rücken (16) im Querschnitt eine Biegung aufweist.

5. Verbindungsanordnung nach einem der Ansprüche 1 bis 4, **dadurch gekennzeichnet, dass** der Einsatz (15) an der Spanneinrichtung (10) befestigt ist, wobei mindestens ein Ende des Einsatzes (10) gegenüber der Spanneinrichtung beweglich ist.

6. Verbindungsanordnung nach einem der Ansprüche 1 bis 5, **dadurch gekennzeichnet, dass** die Schenkel (17, 18) Spitzenabschnitte (24, 25) aufweisen, die in den Aufnahmeraum (26) hineinragen.

7. Verbindungsanordnung nach Anspruch 6, **dadurch gekennzeichnet, dass** mindestens ein Spitzenabschnitt (24, 25) ein gerundetes Ende aufweist.

8. Verbindungsanordnung nach Anspruch 6 oder 7, **dadurch gekennzeichnet, dass** die Spitzenabschnitte (24, 25) der Schenkel (17, 18), die axial einander gegenüberliegen, in der gleichen radialen Position angeordnet sind.

9. Verbindungsanordnung nach einem der Ansprüche 6 bis 8, **dadurch gekennzeichnet, dass** die Spitzenabschnitte (24, 25) jeweils Gleitflächen (27, 28) aufweisen, die zur Radialrichtung (6) der Spanneinrichtung (10) geneigt sind.

10. Verbindungsanordnung nach einem der Ansprüche 1 bis 9, **dadurch gekennzeichnet, dass** die Schenkel (17, 18) im Querschnitt eine Biegung aufweisen, die vom Aufnahmeraum (26) her gesehen konkav ausgebildet ist.

11. Verbindungsanordnung nach Anspruch 10, **dadurch gekennzeichnet, dass** der Einsatz (15) im Querschnitt eine C- oder Q-förmige Biegung aufweist.

12. Verbindungsanordnung nach einem der Ansprüche 1 bis 11, **dadurch gekennzeichnet, dass** die Spanneinrichtung (10) als Schneckengewindeschelle ausgebildet ist.

13. Kegelflanschverbindung (1) mit Kegelflanschen (4, 7) an zwei zu verbindenden Bauteilen (2, 3) und einer Verbindungsanordnung (9) nach einem der Ansprüche 1 bis 12.

14. Kegelflanschverbindung nach Anspruch 13, **dadurch gekennzeichnet, dass** die Kegelflansche (4, 7) in radialer Richtung eine Höhe aufweisen, die größer ist als die radiale Erstreckung des Einsatzes (15).
